# EUROPEAN PATENT APPLICATION

(11) **EP 2 708 609 A1**
(43) Date of publication of application: **19.03.2014**
(21) Application number: 13162467.8
(22) Date of filing: 05.04.2013
(51) Int. Cl.: C21D 9/56, F27D 11/06, F27B 9/24, C21D 8/02, C21D 9/60, F27B 9/04, H05B 6/02

(54) **System and method for induction treatment of metals**

(30) Priority: 17.09.2012 US 201261701749 P
(71) Applicant: Linde Aktiengesellschaft, 80331 München (DE)
(72) Inventor: Wiberg, Sören, 178 35 Ekerö (SE); Murén, David, 185 39 Vaxholm (SE); Ritzén, Ola, 184 94 Åkersberga (SE)
(74) Representative: Hofmann, Andreas

(57) **Abstract**

In order to overcome the problems that earlier systems and methods have experienced, a system and a method for induction treatment, in particular for induction heating, of at least one metal (210; 310; 410) is proposed, comprising:
- heating the metal (210; 310; 410) by means of induction heating, and
- cooling the heated metal (210; 310; 410) by means of impingement (245; 345; 445) with at least one cooling gas.

## Description

### Technical field of the present invention

The present invention basically relates to manufacturing of metal forms, in particular of metal strips, of metal wires, of metal rods, of metal plates and/or of metal sheets, said metal being for example stainless steel. More specifically, the present invention relates to a system and to a method for induction treatment, in particular for induction heating, of at least one metal.

### Background of the present invention; prior art

Stainless steel is used in a wide range of applications because of its resistance to staining and rusting, attributable to the chromium content, usually from twelve percent to twenty percent of the stainless steel alloy. There are numerous alloys that are included in the stainless steels family that are used in a large number of applications and industries, including bulk material handling equipment, building exteriors, roofing, automobile components, chemical process plants, pulp and paper manufacturing, refining, water supply, consumer products, sporting goods, shipbuilding, transportation, etc.

Several types of stainless steel exist for various uses depending on the microstructure of the alloy. Austenitic stainless steels exhibit good corrosion resistance and high ductility. Ferritic stainless steels have high resistance to stress corrosion but are difficult to weld. Martensitic stainless steels contain iron with a needle-like structure. Duplex stainless steels provide good resistance to pitting and crevice corrosion as well as resistance to cracking.

The manufacture of stainless steel involves a series of processes. The raw materials to make the desired stainless steel are first melted and then cast into one of several shapes, such as blooms (rectangular), billets (round or square), slabs, rods or tubes. Further forming steps can be carried out and then the stainless steel is heat treated followed by cleaning and polishing. The stainless steel is then ready for shipment to end users.

The forming operations begin with hot rolling wherein the steel is heated and rolled. Blooms and billets are generally processed into bar or wire, while slabs become strip, wire, rod, plate, or sheet. Once the initial forming has been completed, annealing is carried out. Annealing comprises heating and cooling the steel under controlled conditions to reduce internal stresses and to achieve the desired characteristics for higher strength.

There are several known methods for annealing of stainless steel. For example, the stainless steel may be annealed in air followed by pickling, the use of a nitric-hydrofluoric acid bath to remove scaling. A further example is the use of transverse flux induction heating to anneal the stainless steel followed by cooling in air or water. Pickling is again necessary to remove oxide layers formed during the annealing stage.

Another example is bright annealing in Radiant Tube Furnaces (RTF) or in Electrically Heated Furnaces (ERH) in a reducing atmosphere, used mainly as finishing stage for thin strips. One known method is the induction heating of stainless steel pipes in a controlled atmosphere (such as hydrogen) following be contact cooling with solid graphite blocks in a hydrogen filled encapsulation (from Oppermann Rohrtechnik GmbH).

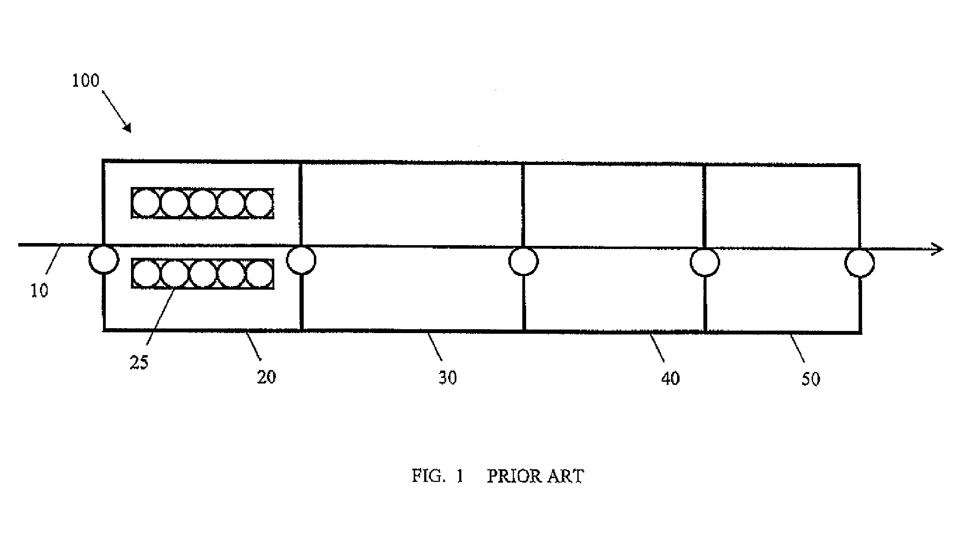

A prior art example of an induction heating process is shown in FIG. 1, wherein the system 100 includes an induction heating stage 20, a final heating/soaking stage 30, a cooling stage 40 and an optional quench stage 50.

A strip 10 of stainless steel to be processed is feed through this system 100:
The strip 10 is first heated in the induction heating stage 20 using induction coil heaters 25. The induction heating is carried out in air.
The strip 10 then passes through the final heating/soaking stage 30 which may comprise radiant heating, electrical heating and/or induction heating.

The strip 10 is then cooled in the cooling stage 40 by air or by water.

The optional quench stage 50 quenches the strip 10 in water or in air.

There remains a need for improvements to such processing of metal, in particular of stainless steel, for example in strip form or in wire form.

### Disclosure of the present invention: object, solution, advantages

Starting from the disadvantages and shortcomings as described above and taking the prior art as discussed into account, an object of the present invention is to overcome the problems that earlier systems and methods have experienced.

This object is accomplished by a system comprising the features of claim 1 as well as by a method comprising the features of claim 14. Advantageous embodiments and expedient improvements of the present invention are disclosed in the dependent claims.

Basically, the present invention provides improved techniques for treating at least one metal, in particular stainless steel, for example in the form of at least one strip, such as in the form of at least one rolled strip, or in the form of at least one wire or in the form of at least one rod or in the form of at least one plate or in the form of at least one sheet.

In one embodiment, a system and a method for induction treatment, in particular for induction heating, of the metal is proposed, the system and the method comprising:
- at least one induction heating stage for heating the metal, in particular by means of at least one at least one induction coil, and
- at least one cooling stage for cooling the heated metal by impingement with at least one cooling gas.

The cooling following the induction annealing or induction heating is performed by impingement of the cooling gas(es).

The gas(es) that may be used include(s) hydrogen, nitrogen, argon, helium, water vapour, carbon dioxide, carbon monoxide, hydrocarbons and mixtures thereof.

According to an advantageous embodiment of the present invention, the cooling gas used for cooling the heated metal can be recycled by at least one recycling means. Preferably, this recycling means can be embodied as at least one heat exchanger, as at least one cooler, as at least one fan and/or as at least one compressor.

In an expedient embodiment of the present invention, at least one reduced or reducing atmosphere, in particular at least one reducing gas atmosphere, for example at least one hydrogen (H₂) atmosphere, may be maintained in the induction heating stage. In connection therewith or independently thereof, the induction heating stage can preferably be encapsulated within at least one gas tight housing, for example in order to keep the reduced or reducing atmosphere within the induction heating stage.

According to a favoured embodiment of the present invention, at least one final heating/soaking stage can be provided between the induction heating stage and the cooling stage. Preferably, this final heating/soaking stage can be embodied as radiant heating, as electrical heating and/or as induction heating.

In an expedient embodiment of the present invention, at least one reduced or reducing atmosphere, in particular at least one reducing gas atmosphere, for example at least one hydrogen (H₂) atmosphere, may be maintained in the final heating/soaking stage. This reduced or reducing atmosphere within the final heating/soaking stage can be essentially the same as the reduced or reducing atmosphere within the induction heating stage, or this reduced or reducing atmosphere within the final heating/soaking stage can be different from the reduced or reducing atmosphere within the induction heating stage.

According to a preferred embodiment of the present invention, at least one quench stage can be provided after the cooling stage. Preferably, this quench stage can be embodied as quenching the metal with water and/or with air.

The present invention finally relates to the use of at least one system as described above and/or of the method as described above for induction annealing of at least one metal, in particular of stainless steel. This induction annealing may be carried out in a reduced or reducing atmosphere, in particular in a reducing gas atmosphere, for example in a hydrogen (H₂) atmosphere.

The present invention provides many advantages:
By using induction heating for the annealing of the metal, the need for an extensive pickling process can be eliminated. For example, process steps related to pickling following air annealing that can be eliminated by using induction heating are oxidizing, scale braking, neolytic pickling, rinsing and brushing, acid pickling, rinsing and/or skin pass rolling.

Induction heating is also advantageous as compared to bright annealing because the capital expenditure (so-called capex) and footprint for equipment related to bright annealing are much greater that those needed for induction heating.

Apart from that, also the annealing capacity for bright annealing is more limited than that for induction heating.

The present invention wherein a reduced or reducing atmosphere is maintained in the induction heating stage provides advantages over prior art induction heating in air. In particular, by carrying out the heating in a gas atmosphere, the need for subsequent oxidizing, scale braking, neolytic pickling, rinsing and brushing, acid pickling and rinsing can be eliminated.

Further, by cooling with impingement of reducing gas additional processing stages can be eliminated.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figures taken in conjunction with the description of three embodiments, of which:
- FIG. 1: is a schematic diagram of a stainless steel annealing process system according to the prior art, said system working according to a prior art method;
- FIG. 2: is a schematic diagram of a first embodiment of a stainless steel annealing process system according to the present invention, said system working according to the method of the present invention;
- FIG. 3: is a schematic diagram of a second embodiment of a stainless steel annealing process system according to the present invention, said system working according to the method of the present invention; and
- FIG. 4: is a schematic diagram of a third embodiment of a stainless steel annealing process system according to the present invention, said system working according to the method of the present invention.

### Detailed description of the drawings; best way of embodying the present invention

The present invention provides new stainless steel annealing processes and will be described with reference to the drawing figures.

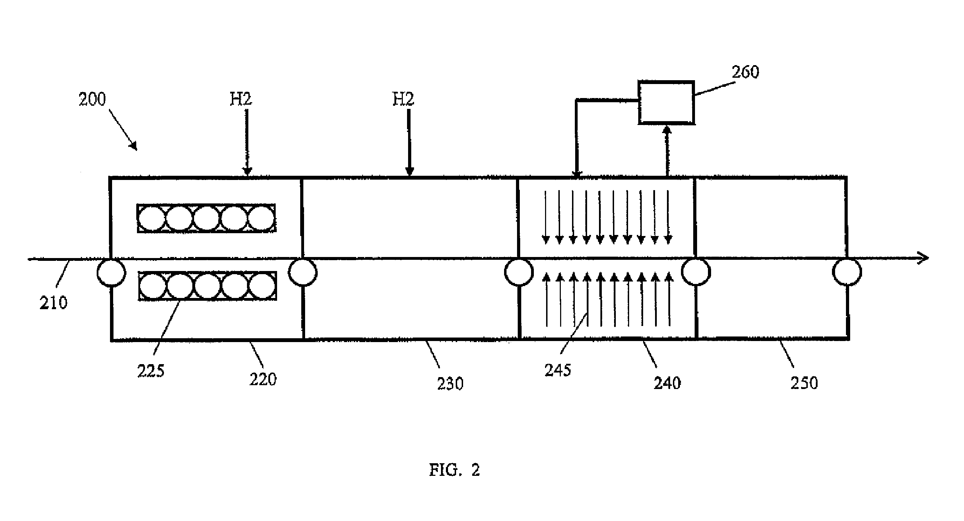

FIG. 2 shows a first embodiment of an annealing process system 200 according to the present invention, said system 200 being similar to that shown in FIG. 1. In particular, the system 200 includes an induction heating stage 220, a final heating/soaking stage 230, a cooling stage 240 and an optional quench stage 250.

A strip 210 of stainless steel to be processed is feed through the system 200:
The strip 210 is first heated in the induction heating stage 220 using induction coil heaters 225. A hydrogen (H₂) atmosphere is maintained in the induction heating stage 220.
The strip 210 then passes through the final heating/soaking stage 230 which may comprise radiant heating, electrical heating and/or induction heating also in a hydrogen (H₂) atmosphere.
The strip 210 is then cooled in the cooling stage 240.

According to the present invention the cooling may be carried out using cooling gas impingement shown by arrows 245. The gas used may be one or more of hydrogen, nitrogen, argon, helium, water vapour, carbon dioxide, carbon monoxide, and hydrocarbons.

The cooling gas may be recycled and reused through the use of a recycling means 260, which may be a heat exchanger, cooler and fan, compressor, etc.

The strip 210 may be optionally quenched in quench stage 250 with water or with air.

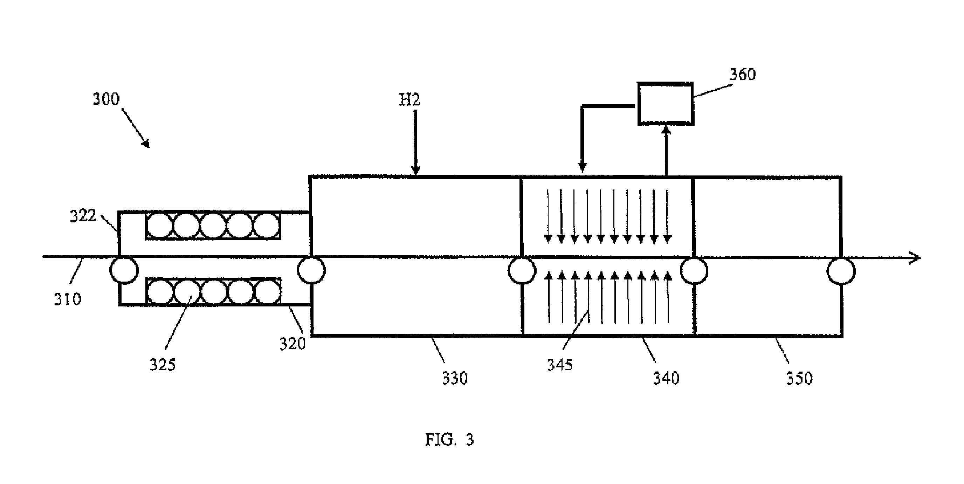

Another embodiment of the present invention is shown in FIG. 3 which shows an annealing process system 300. In particular, the system 300 includes an induction heating stage 320, a final heating/soaking stage 330, a cooling stage 340 and an optional quench stage 350.

A strip 310 of stainless steel to be processed is feed through the system 300:
The strip 310 is first heated in the induction heating stage 320 using induction coil heaters 325. A hydrogen (H₂) atmosphere is maintained in the induction heating stage 320. In this second embodiment of the present invention, the induction heating stage 320 is encapsulated within a gas tight housing 322.
The strip 310 then passes through the final heating/soaking stage 330 which may comprise radiant heating, electrical heating and/or induction heating also in a hydrogen (H₂) atmosphere.
The strip 310 is then cooled in the cooling stage 340.

According to the present invention the cooling may be carried out using cooling gas impingement shown by arrows 345. The gas used may be one or more of hydrogen, nitrogen, argon, helium, water vapour, carbon dioxide, carbon monoxide, and hydrocarbons.

The cooling gas may be recycled and reused through the use of a recycling means 360, which may be a heat exchanger, cooler and fan, compressor, etc.

The strip 310 may be optionally quenched in quench stage 350 with water or with air.

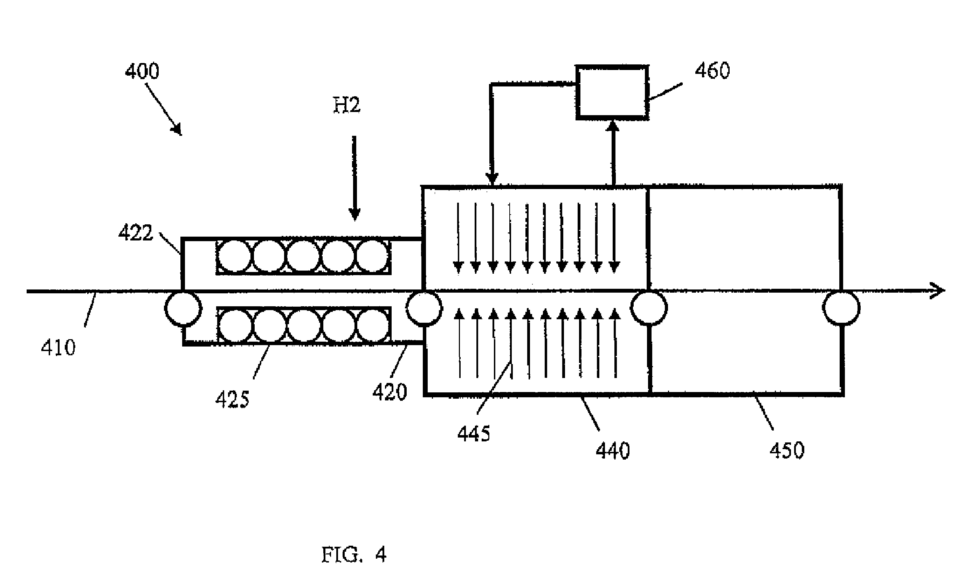

A further embodiment of the present invention is shown in FIG. 4 which shows an annealing process system 400 that includes an induction heating stage 420, a cooling stage 440 and an optional quench stage 450.

A strip 410 of stainless steel to be processed is feed through the system 400:
The strip 410 is first heated in the induction heating stage 420 using induction coil heaters 425. A hydrogen (H₂) atmosphere is maintained in the induction heating stage 420. In this third embodiment of the present invention, the induction heating stage 420 is again encapsulated within a gas tight housing 422.

The final heating/soaking stage is not used in this system 400, and the strip 410 passes directly to the cooling stage 440.

According to the present invention the cooling may be carried out using cooling gas impingement shown by arrows 445. The gas used may be one or more of hydrogen, nitrogen, argon, helium, water vapour, carbon dioxide, carbon monoxide, and hydrocarbons.

The cooling gas may be recycled and reused through the use of a recycling means 460, which may be a heat exchanger, cooler and fan, compressor, etc.

The strip 410 may be optionally quenched in quench stage 450 with water or with air.

The present invention has been described by way of example with reference to stainless steel production, but is equally applicable to other metals, such as steel of all types, titanium and titanium alloys, aluminium and aluminium alloys, and copper and copper alloys.

The present invention can be used with any type of induction heater, for example solenoidal, transverse flux, etc.

The present invention can be used for processing of all different types of products, including strips (for example rolled strips), wire, rods, plates, sheets, etc.

It is anticipated that other embodiments and variations of the present invention will become readily apparent to the skilled artisan in the light of the foregoing description, and it is intended that such embodiments and variations likewise be included within the scope of the present invention as set out in the appended claims.

**List of reference numerals**

| | |
|---|---|
| 100 | system, in particular annealing process system (prior art; cf. FIG. 1) |
| 10 | metal strip, in particular stainless steel strip (prior art; cf. FIG. 1) |
| 20 | induction heating stage (prior art; cf. FIG. 1) |
| 25 | induction coil heater (prior art; cf. FIG. 1) |
| 30 | final heating/soaking stage (prior art; cf. FIG. 1) |
| 40 | cooling stage (prior art; cf. FIG. 1) |
| 50 | quench stage (prior art; cf. FIG. 1) |
| 200 | system, in particular annealing process system (first embodiment; cf. FIG. 2) |
| 210 | metal strip, in particular stainless steel strip (first embodiment; cf. FIG. 2) |
| 220 | induction heating stage (first embodiment; cf. FIG. 2) |
| 225 | induction coil heater (first embodiment; cf. FIG. 2) |
| 230 | final heating/soaking stage (first embodiment; cf. FIG. 2) |
| 240 | cooling stage (first embodiment; cf. FIG. 2) |
| 245 | cooling gas impingement (first embodiment; cf. FIG. 2) |
| 250 | quench stage (first embodiment; cf. FIG. 2) |
| 260 | recycling means (first embodiment; cf. FIG. 2) |
| 300 | system, in particular annealing process system (second embodiment; cf. FIG. 3) |
| 310 | metal strip, in particular stainless steel strip (second embodiment; cf. FIG. 3) |
| 320 | induction heating stage (second embodiment; cf. FIG. 3) |
| 322 | housing, in particular gas tight housing (second embodiment; cf. FIG. 3) |
| 325 | induction coil heater (second embodiment; cf. FIG. 3) |
| 330 | final heating/soaking stage (second embodiment; cf. FIG. 3) |
| 340 | cooling stage (second embodiment; cf. FIG. 3) |
| 345 | cooling gas impingement (second embodiment; cf. FIG. 3) |
| 350 | quench stage (second embodiment; cf. FIG. 3) |
| 360 | recycling means (second embodiment; cf. FIG. 3) |
| 400 | system, in particular annealing process system (third embodiment; cf. FIG. 4) |
| 410 | metal strip, in particular stainless steel strip (third embodiment; cf. FIG. 4) |
| 420 | induction heating stage (third embodiment; cf. FIG. 4) |
| 422 | housing, in particular gas tight housing (third embodiment; cf. FIG. 4) |
| 425 | induction coil heater (third embodiment; cf. FIG. 4) |
| 440 | cooling stage (third embodiment; cf. FIG. 4) |
| 445 | cooling gas impingement (third embodiment; cf. FIG. 4) |
| 450 | quench stage (third embodiment; cf. FIG. 4) |
| 460 | recycling means (third embodiment; cf. FIG. 4) |

## Claims

1. A system (200; 300; 400) for induction treatment, in particular for induction heating, of at least one metal (210; 310; 410), the system (200; 300; 400) comprising:
- at least one induction heating stage (220; 320; 420) for heating the metal (210; 310; 410), and
- at least one cooling stage (240; 340; 440) for cooling the heated metal (210; 310; 410) by impingement (245; 345; 445) with at least one cooling gas.

2. The system according to claim 1 wherein the cooling gas is at least one of hydrogen, nitrogen, argon, helium, water vapour, carbon dioxide, carbon monoxide, hydrocarbon and/or a mixture thereof.

3. The system according to claim 1 or 2 further comprising at least one recycling means (260; 360; 460) for recycling the cooling gas.

4. The system according to claim 3 wherein the recycling means (260; 360; 460) is at least one heat exchanger, at least one cooler, at least one fan and/or at least one compressor.

5. The system according to at least one of claims 1 to 4 wherein the induction heating stage (220; 320; 420) comprises at least one induction coil (225; 325; 425).

6. The system according to at least one of claims 1 to 5 wherein the induction heating stage (320; 420) is encapsulated within at least one gas tight housing (322; 422).

7. The system according to at least one of claims 1 to 6 further comprising at least one final heating/soaking stage (230; 330) between the induction heating stage (220; 320; 420) and the cooling stage (240; 340; 440).

8. The system according to claim 7 wherein the final heating/soaking stage (230; 330) comprises radiant heating, electrical heating and/or induction heating.

9. The system according to at least one of claims 1 to 8 wherein at least one respective reduced or reducing atmosphere, in particular at least one respective reducing gas atmosphere, for example at least one respective hydrogen (H₂) atmosphere, is maintained
- in the induction heating stage (220; 320; 420) and/or
- in the final heating/soaking stage (230; 330).

10. The system according to at least one of claims 1 to 9 further comprising at least one quench stage (250; 350; 450) after the cooling stage (240; 340; 440).

11. The system according to claim 10 wherein the quench stage (250; 350; 450) comprises quenching the metal (210; 310; 410) with water and/or with air.

12. The system according to at least one of claims 1 to 11 wherein the metal (210; 310; 410) is stainless steel.

13. The system according to at least one of claims 1 to 12 wherein the metal (210; 310; 410) comprises the form
- of at least one strip, in particular of at least one rolled strip,
- of at least one wire,
- of at least one rod,
- of at least one plate, and/or
- of at least one sheet.

14. A method for induction treatment, in particular for induction heating, of at least one metal (210; 310; 410), the method comprising the steps of:
- heating the metal (210; 310; 410) by means of induction heating, and
- cooling the heated metal (210; 310; 410) by means of impingement (245; 345; 445) with at least one cooling gas.

15. Use of at least one system (200; 300; 400) according to at least one of claims 1 to 13 and/or of the method according to claim 14 for induction annealing of at least one metal (210; 310; 410), in particular of stainless steel.
